(19) Europäisches Patentamt / European Patent Office / Office européen des brevets

(11) **EP 2 820 752 B1**

## (12) EUROPÄISCHE PATENTSCHRIFT

(45) Veröffentlichungstag und Bekanntmachung des Hinweises auf die Patenterteilung:
**18.03.2020  Patentblatt 2020/12**

(51) Int Cl.:
*H02M 7/219* *(2006.01)*     *H02M 7/539* *(2006.01)*
*H02M 1/00* *(2006.01)*

(21) Anmeldenummer: **13703011.0**

(22) Anmeldetag: **01.02.2013**

(86) Internationale Anmeldenummer:
**PCT/EP2013/052076**

(87) Internationale Veröffentlichungsnummer:
**WO 2013/127597 (06.09.2013 Gazette 2013/36)**

(54) **SEMI-AKTIVER EINSPEISEUMRICHTER MIT BLINDLEISTUNGSVEKTORREGELUNG**

SEMI-ACTIVE FRONT END CONVERTER WITH VECTOR CONTROL OF REACTIVE POWER

REDRESSEUR SEMI-ACTIVE AVEC RÉGLAGE VECTORIEL DE PUISSANCE REACTIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2012  DE 102012203204**

(43) Veröffentlichungstag der Anmeldung:
**07.01.2015  Patentblatt 2015/02**

(73) Patentinhaber: **Beckhoff Automation GmbH**
**33415 Verl (DE)**

(72) Erfinder: **KRAH, Jens Onno**
**42327 Wuppertal (DE)**

(74) Vertreter: **Patentanwaltskanzlei WILHELM & BECK**
**Prinzenstraße 13**
**80639 München (DE)**

(56) Entgegenhaltungen:
US-A- 5 585 708     US-A- 5 585 708
US-A- 6 038 152     US-A1- 2005 207 192

- ARWINDRA RIZQIAWAN ET AL: "Impact of double-loop controller on grid connected inverter input admittance using virtual resistor", APPLIED POWER ELECTRONICS COLLOQUIUM (IAPEC), 2011 IEEE, IEEE, 18 April 2011 (2011-04-18), pages 170-175, XP031878376, DOI: 10.1109/IAPEC.2011.5779853 ISBN: 978-1-4577-0007-1
- WEI YAO ET AL: "Design and Analysis of the Droop Control Method for Parallel Inverters Considering the Impact of the Complex Impedance on the Power Sharing", IEEE TRANSACTIONS ON INDUSTRIAL ELECTRONICS, IEEE SERVICE CENTER, PISCATAWAY, NJ, USA, vol. 58, no. 2, 1 February 2011 (2011-02-01), pages 576-588, XP011341619, ISSN: 0278-0046, DOI: 10.1109/TIE.2010.2046001
- A. Nonymous: "SINAMICS SM150 Listenhandbuch - Netzspannungsüberwachung 1,2" In: "SINAMICS SM150 Listenhandbuch - Netzspannungsüberwachung 1,2", 31 July 2007 (2007-07-31), Siemens AG, XP055329289, pages 2-870,
- MARSCHALKO R ET AL: "Optimal control and appropriate pulse width modulation for a three-phase voltage DC-link PWM converter", PROCEEDINGS OF THE INDUSTRY APPLICATIONS SOCIETY ANNUAL MEETING. HOUSTON, OCT. 4 - 9, 1992; [PROCEEDINGS OF THE INDUSTRY APPLICATIONS SOCIETY ANNUAL MEETING], NEW YORK, IEEE, US, vol. -, 4 October 1992 (1992-10-04), pages 1042-1049, XP010063644, DOI: 10.1109/IAS.1992.244432 ISBN: 978-0-7803-0635-6

**Beschreibung**

Die Erfindung betrifft ein Verfahren zum Ansteuern eines Frequenzumrichters sowie eine Schaltungsanordnung zum Erzeugen einer Zwischenkreisspannung aus einer Netzspannung eines Dreiphasen-Drehstromnetzes.

Es ist bekannt, in der Fertigungs- und Prozessautomatisierung elektrische Antriebe mit veränderlicher Drehzahl zu benutzen. Zur Steuerung und Regelung solcher elektrischer Antriebe ist bekannt, Frequenzumrichter mit Spannungszwischenkreis zu verwenden. Entsprechende Ansteuerschaltungen erzeugen zunächst aus einer Netzspannung, zumeist einer ersten Dreiphasen-Drehspannung, durch eine Gleichrichtung eine als Zwischenkreisspannung bezeichnete Gleichspannung. Diese Gleichspannung wird anschließend durch einen Wechselrichter in eine zweite Dreiphasen-Drehspannung mit einstellbarer Amplitude und Frequenz umgeformt. Der Umrichter zur Erzeugung der zweiten Dreiphasen-Drehspannung kann dabei beispielsweise mittels Pulsweitenmodulation angesteuert werden.

Als Gleichrichter zur Erzeugung der Zwischenkreisspannung werden im Stand der Technik häufig sechspulsige Brückengleichrichter genutzt. Diese weisen einen unkomplizierten Aufbau und ein robustes Betriebsverhalten auf.

Ein Vorteil bekannter Brückengleichrichter ist, dass sie problemlos drehspannungsseitig und gleichspannungsseitig parallel geschaltet werden können.

Ein Nachteil solcher Diodengleichrichter ist allerdings, dass sie es zwar ermöglichen, dem Dreiphasen-Drehstromnetz Energie zu entnehmen, eine Rückspeisung von Energie in das Netz jedoch nicht erlauben, da die Dioden des Brückengleichrichters einen Stromfluss lediglich in eine Richtung gestatten.

Wird ein durch einen Frequenzumrichter angesteuerter Motor elektrisch abgebremst, so wird die dabei frei werdende Energie in einem Kondensator des Zwischenkreises des Frequenzumrichters gespeichert. Dadurch steigt die Gleichspannung im Zwischenkreis an. Wird ein Zwischenkreiskondensator mit großer Kapazität verwendet, so kann entsprechend viel Energie gespeichert werden. Dies ist beispielsweise bei einer Parallelschaltung mehrerer Geräte der Fall. Erreicht die Zwischenkreisspannung allerdings ein für die Bauteile kritisches Niveau, so muss entweder der Bremsvorgang des Motors abgebrochen oder die nicht mehr im Zwischenkreiskondensator speicherbare Leistung in einem zeitweise zuschaltbaren Brems- oder Ballastwiderstand in Wärme umgesetzt und damit verschwendet werden.

Eine Alternative zur Erzeugung der Zwischenkreisspannung mittels ungesteuerter Diodengleichrichtung ist die Verwendung eines gesteuerten Einspeise-Rückspeise-Umrichters. Solche Einspeise-Rückspeise-Umrichter werden auch als Active Front End bezeichnet. Derartige Einspeise-Rückspeise-Umrichter verwenden anstelle von sechs Dioden sechs Transistoren, meist Bipolar-Transistoren mit isolierter Gate-Elektrode (IGBT-Transistoren) mit Freilaufdiode. Zusätzlich sind zur Stromglättung drei Netzinduktivitäten erforderlich. Im Betrieb des Einspeise-Rückspeise-Umrichters wird die Zwischenkreisspannung unabhängig von eventuellen Netzspannungsschwankungen gemessen und auf einen konstanten Wert, beispielsweise auf 700 V, geregelt.

Ein Vorteil solcher Einspeise-Rückspeise-Umrichter ist, dass die gegenüber der Netzspannung erhöhte Zwischenkreisspannung es ermöglicht, Motoren mit höherer Drehzahl zu betreiben.

Vorteilhafterweise gestatten es Einspeise-Rückspeise-Umrichter auch, Energie aus dem Zwischenkreis zurück in das Versorgungsnetz zu speisen.

Allerdings ist die im Zwischenkreiskondensator gespeicherte Energie bei herkömmlichen Einspeise-Rückspeise-Umrichtern konstant. Leistung kommt stets direkt aus dem Versorgungsnetz und fließt auch direkt zurück in das Versorgungsnetz. Ein Abfangen kurzzeitiger Leistungsspitzen durch den Zwischenkreiskondensator ist nicht möglich.

Ein weiterer Nachteil solcher Einspeise-Rückspeise-Umrichter ist der gegenüber einfachen Dioden-Gleichrichtern deutlich größere Aufwand, der zu einer erhöhten Baugröße und zu erhöhten Kosten führt.

Durch die notwendige Regelung ist der Betrieb von herkömmlichen Einspeise-Rückspeise-Umrichtern außerdem weniger robust als eine Dioden-Gleichrichtung. Zu den regelungstechnischen Energiespeichern, die durch die Zwischenkreiskapazität und die drei Netzinduktivitäten gebildet werden, kommen zusätzlich zwei Integratoren (PI-Vektorregelung) der Stromregelung und einer für die Spannungsregelung hinzu, wodurch die Ordnung des Systems erhöht wird.

Ein weiterer Nachteil bekannter Einspeise-Rückspeise-Umrichter besteht darin, dass eine Parallelschaltung der Gleichspannungs-Zwischenkreise nicht vorgesehen ist. Üblicherweise werden mehrere Antriebe von einem einzigen Einspeise-Rückspeise-Umrichter versorgt. Dieser muss daher für die maximal mögliche Spitzenleistung ausgelegt werden, was im Normalbetrieb zu einem suboptimalen Wirkungsgrad führt.

Ein weiterer Nachteil herkömmlicher Einspeise-Rückspeise-Umrichter besteht darin, dass bei einem realen Versorgungsnetz mit induktivem Innenwiderstand, beispielsweise bei Vorhandensein eines Transformators, die Regelkreise von mehreren parallel geschalteten Einspeise-Rückspeise-Umrichtern nicht vollständig entkoppelt sind.

Ein weiterer Nachteil von Einspeise-Rückspeise-Umrichtern gemäß dem Stand der Technik liegt im um etwa einen Prozentpunkt reduzierten Wirkungsgrad im Motorbetrieb. Während Diodenbrücken einen Wirkungsgrad von etwa 99% aufweisen, haben Einspeise-Rückspeise-Umrichter lediglich einen Wirkungsgrad von ungefähr 98%. Dies ist durch zusätzliche Verluste in den schnell schaltenden Leistungshalbleitern sowie in der größeren Netzinduktivität zur Stromglättung bedingt. Daher lohnt sich herkömmlicherweise eine Netzrückspeisung von Energie erst, wenn im Betrieb durchschnittlich deutlich mehr als etwa 1% der Leistung wieder rückgespeist werden.

Die US 5,585,708 beschreibt eine Steuervorrichtung zum Ansteuern eines Drehstrommotors.

Die US 2005/0207192 A1 beschreibt eine Vektorsteuerung für einen mehrphasigen synchronen Gleichrichter.

Die US 6,038,152 beschreibt einen aktiven Gleichrichter-Schaltkreis mit einer Gleichrichterbrücke mit einer Mehrzahl passiver Gleichrichter und den Gleichrichtern parallel geschalteten Schaltern.

Das Dokument MARSCHALKO R. ET. AL: "Optimal control and appropriate pulse width modulation for a three-phase voltage DC-link PWM Converter", PROCEEDINGS OF THE INDUSTRY APPLICATIONS SOCIETY ANNUAL MEETHING.HOUSTON, OCT. 4-9, 1992; [PROCEEDINGS OF THE INDUSTRY APPLICATIONS SOCIETY ANNUAL MEETING], NEW YORK, IEEE; US, Bd. -, 4. Oktober 1992 (1992-10-04), Seiten 1042-1049 befasst sich mit Regelungsstrategien dreiphasiger Frequenzumrichter mit Gleichspannungs-Zwischenkreis.

Das Dokument ARWINDRA RIZQIAWAN ETA AL: "Impact of doubleloop controller on grid connected inverter input admittance using virtual resistor", APPLIED POWER ELECTRONICS COLLOQUIUM (IAPEC), 2011 IEEE, IEEE, 18. April 2011 (2011-04-18), Seiten 170-175, XP031878376, DOI: 10.1109/IAPEC.2011.5779853, ISBN: 978-1-4577-0007-1 beschreibt eine Anwendung des Konzepts eines virtuellen Widerstands zur Erzielung einer positiven Eingangsadmittanz bei einem Umrichter.

Das Dokument WIE YAO ET AL: "Design and Analysis of the Droop Control Method for Parallel Inverters Considering the Impact of the Complex Impedance on the Power Sharing", IEEE TRANSACTIONS ON INDUSTRIAL ELECTRONICS, IEEE SERVICE CENTER, PISCATAWAY, NJ, USA, Bd. 58, Nr. 2, 1. Februar 2011 (2011-02-01), Seiten 576-588, XP011341619, ISSN: 0278-0046, DOI: 10.1109/TIE.2010.2046001 untersucht Eigenschaften aktiver und reaktiver Leistungsteilung bei parallelen Umrichtersystemen.

Das Dokument "SINAMICS SM150 Listenhandbuch - Netzspannungsüberwachung 1,2" In: "SINAMICS SM150 Listenhandbuch - Netzspannungsüberwachung 1,2", 31. Juli 2007 (2007-07-31), Siemens AG; XP055329289, Seiten 2-870, beschreibt Signale und Überwachungsfunktionen zur Netzspannungsüberwachung beim SINAMICS-System.

Die Aufgabe der vorliegenden Erfindung besteht darin, ein verbessertes Verfahren zum Ansteuern eines Frequenzumrichters anzugeben. Diese Aufgabe wird durch ein Verfahren zum Ansteuern eines Frequenzumrichters mit den Merkmalen des Anspruchs 1 gelöst. Eine weitere Aufgabe der vorliegenden Erfindung besteht darin, eine verbesserte Schaltungsanordnung zum Erzeugen einer Zwischenkreisspannung aus einer Netzspannung eines Dreiphasen-Drehstromnetzes bereitzustellen. Diese Aufgabe wird durch eine Schaltungsanordnung mit den Merkmalen des Anspruchs 3 gelöst. Bevorzugte Weiterbildungen sind in den abhängigen Ansprüchen angegeben.

Ein erfindungsgemäßes Verfahren zum Ansteuern eines Frequenzumrichters umfasst Schritte zum Messen von in Phasenleitern eines Dreiphasen-Drehstromnetzes fließenden Phasenströmen, zum Erzeugen eines dritten Modulationsraumzeigers, der einen zu einer Netzspannung des Dreiphasen-Drehstromnetzes synchronen Winkel und eine Amplitude aufweist, die von einem festgelegten Modulationsindex und den gemessenen Phasenströmen abhängig ist, und zum Modulieren des Frequenzumrichters gemäß des dritten Modulationsraumzeigers. Dabei werden zum Erzeugen des dritten Modulationsraumzeigers Schritte ausgeführt zum Erzeugen eines ersten Modulationsraumzeigers, der den zu der Netzspannung des Dreiphasen-Drehstromnetzes synchronen Winkel und den festgelegten Modulationsindex als Amplitude aufweist, und zum Erzeugen des dritten Modulationsraumzeigers in Abhängigkeit von dem ersten Modulationsraumzeiger und den gemessenen Phasenströmen.

Vorteilhafterweise erfordert dieses Verfahren keine aktive Strom- oder Spannungsregelung. Stattdessen stellt sich eine Zwischenkreisspannung bei diesem Verfahren ungeregelt relativ zu einer Spannung eines Dreiphasen-Drehstromnetzes ein. Dadurch reduziert sich vorteilhafterweise der zur Durchführung des Verfahrens notwendige Aufwand und es kann sich ein gegenüber dem Stand der Technik verbesserter Wirkungsgrad beim Betrieb des Frequenzumrichters ergeben. Ebenfalls vorteilhaft ist, dass sich eine netzspannungsseitige Ausgangsspannung des Frequenzumrichters mit steigenden Phasenströmen der Netzspannung des Dreiphasen-Drehstromnetzes annähert, wodurch die Phasenströme automatisch begrenzt werden.

Zum Erzeugen des ersten Modulationsraumzeigers werden Schritte ausgeführt zum Durchführen einer Park-Transformation unter Verwendung des Winkels, um die gemessenen Phasenströme in einen ersten Stromraumzeiger zu transformieren, zum Regeln des Winkels derart, dass eine Blindstromkomponente des ersten Stromraumzeigers verschwindet, und zum Erzeugen des ersten Modulationsraumzeigers, der den Winkel und den festgelegten Modulationsindex als Amplitude aufweist, mittels einer inversen Park-Transformation. Vorteilhafterweise stellt dies eine einfache Möglichkeit dar, den ersten Modulationsraumzeiger mit zur Netzspannung des Dreiphasen-Drehstromnetzes synchronem Winkel zu erzeugen.

In einer Weiterbildung des Verfahrens wird die Blindstromkomponente des ersten Stromraumzeigers mit einem Quotienten aus einem festgelegten virtuellen Widerstand und dem festgelegten Modulationsindex multipliziert, um eine Winkelabweichung zu erhalten, wobei die Winkelabweichung einer Phasenregelschleife zugeführt wird, um den Winkel zu regeln. Vorteilhafterweise bewirkt die Regelung der Phasenregelschleife dann, dass eine Blindstromkomponente des ersten Stromraumzeigers stets einen verschwindenden Wert aufweist.

In einer Weiterbildung des Verfahrens werden zum Erzeugen des dritten Modulationsraumzeigers Schritte ausgeführt zum Durchführen einer Clarke-Transformation, um die gemessenen Phasenströme in einen zweiten Stromraumzeiger zu transformieren, zum Multiplizieren des zweiten Stromraumzeigers mit einem festgelegten virtuellen Widerstand, um einen zweiten Modulationsraumzeiger zu erhalten, und zum Subtrahieren des zweiten Modulationsraumzeigers von dem ersten Modulationsraumzeiger, um den dritten Modulationsraumzeiger zu erhalten. Vorteilhafterweise stellt sich die Zwischenkreisspannung dann ungeregelt relativ zur Netzspannung des Dreiphasen-Drehstromnetzes mit einem virtuellen Widerstand ein. Vorteilhafterweise ermöglicht es das Verfahren, dass die Zwischenkreisspannung abhängig vom Wert des virtuellen Widerstands entsprechend des Ohmschen Gesetzes proportional zu einem Laststrom fällt oder, im Falle einer Rückspeisung, steigt. Dieses Verhalten hat den Vorteil, dass bei Erreichen eines vorgebbaren Maximalwerts der Zwischenkreisspannung ein optional zuschaltbarer Ballastwiderstand einen weiteren Spannungsanstieg verhindern kann. Außerdem kann bei Erreichen eines vorgebbaren maximalen Laststroms, also bei Erreichen eines durch die Netzspannung, den virtuellen Widerstand und des vorgegebenen maximalen Laststroms festgelegten Minimalwerts der Zwischenkreisspannung, eine parallel geschaltete Diodengleichrichtung ohne Netzinduktivität den zusätzlich benötigten Strom übernehmen. Ein weiterer Vorteil des Verfahrens ist, dass durch den nun erlaubten Spannungshub im Gleichspannungszwischenkreis kurzzeitige Spitzenleistungen im Zwischenkreiskondensator gespeichert oder aus diesem entnommen werden können.

Ein besonderer Vorteil des Verfahrens besteht darin, dass Einspeise-Rückspeise-Umrichter mit mittels des Verfahrens angesteuerten Frequenzumrichtern uneingeschränkt parallel geschaltet werden können. Dies ermöglicht eine bedarfsabhängige Zu- und Abschaltung einzelner Module im laufenden Betrieb, wodurch sich in allen Leistungssituationen ein besonders günstiger Wirkungsgrad ergibt.

Ein weiterer Vorteil dieses Verfahrens zum Ansteuern eines Frequenzumrichters besteht in seiner Robustheit, wodurch sich auch bei weichen Netzen keine oder nur geringe Schwingneigung ergibt.

In einer zusätzlichen Weiterbildung des Verfahrens wird mittels einer Raumzeigermodulation aus dem dritten Modulationsraumzeiger ein Ansteuersignal für den Frequenzumrichter erzeugt. Die netzspannungsseitige Ausgangsspannung des Frequenzumrichters ergibt sich dann aus dem dritten Modulationsraumzeiger und der Zwischenkreisspannung. Vorteilhafterweise kann der Frequenzumrichter selbst dann auf bekannte Weise, beispielsweise als IGBT-Wechselrichter, ausgebildet sein.

Eine erfindungsgemäße Schaltungsanordnung zum Erzeugen einer Zwischenkreisspannung aus einer Netzspannung eines Dreiphasen-Drehstromnetzes umfasst einen Zwischenkreiskondensator, der über einen Frequenzumrichter und Glättungsinduktivitäten mit einem ersten Phasenleiter, einem zweiten Phasenleiter und einem dritten Phasenleiter eines Dreiphasen-Drehstromnetzes verbindbar ist, eine Messvorrichtung zum Messen in den Phasenleitern fließender Phasenströme, und eine Steuervorrichtung, die dazu vorgesehen ist, den Frequenzumrichter anzusteuern. Dabei ist die Steuervorrichtung ausgebildet, einen dritten Modulationsraumzeiger zu erzeugen, der einen zu einer Netzspannung des Dreiphasen-Drehstromnetzes synchronen Winkel und eine Amplitude aufweist, die von einem festgelegten Modulationsindex und den gemessenen Phasenströmen abhängig ist, und den Frequenzumrichter gemäß des dritten Modulationsraumzeigers zu modulieren. Dabei ist die Steuervorrichtung ausgebildet, zum Erzeugen des dritten Modulationsraumzeigers einen ersten Modulationsraumzeiger zu erzeugen, der den zu der Netzspannung des Dreiphasen-Drehstromnetzes synchronen Winkel und den festgelegten Modulationsindex als Amplitude aufweist, und den dritten Modulationsraumzeiger in Abhängigkeit von dem ersten Modulationsraumzeiger und den gemessenen Phasenströmen zu erzeugen.

Vorteilhafterweise erfordert diese Schaltungsanordnung keine aktive Strom- oder Spannungsregelung. Stattdessen stellt sich eine Zwischenkreisspannung bei dieser Schaltungsanordnung ungeregelt relativ zu einer Spannung eines Dreiphasen-Drehstromnetzes ein. Dadurch reduziert sich vorteilhafterweise die Komplexität der Schaltungsanordnung und es kann sich ein gegenüber dem Stand der Technik verbesserter Wirkungsgrad ergeben. Vorteilhafterweise nähert sich eine netzspannungsseitige Ausgangsspannung des Frequenzumrichters mit steigenden Phasenströmen der Netzspannung des Dreiphasen-Drehstromnetzes an, wodurch die Phasenströme automatisch begrenzt werden.

Die Steuervorrichtung ist ausgebildet, zum Erzeugen des ersten Modulationsraumzeigers über eine Park-Transformation unter Verwendung des Winkels die gemessenen Phasenströme in einen ersten Stromraumzeiger zu transformieren, mittels einer Phasenregelschleife den Winkel derart zu regeln, dass eine Blindstromkomponente des ersten Stromraumzeigers verschwindet, und über eine inverse Park-Transformation den ersten Modulationsraumzeiger zu erzeugen, der den Winkel und den festgelegten Modulationsindex als Amplitude aufweist. Vorteilhafterweise stellt dies eine einfache Möglichkeit dar, den ersten Modulationsraumzeiger mit zur Netzspannung des Dreiphasen-Drehstromnetzes synchronem Winkel zu erzeugen.

In einer Weiterbildung der Schaltungsanordnung ist die Steuervorrichtung ausgebildet, die Blindstromkomponente des ersten Stromraumzeigers mit einem Quotienten aus einem festgelegten virtuellen Widerstand und dem festgelegten Modulationsindex zu multiplizieren, um eine Winkelabweichung zu erhalten. Dabei ist die Steuervorrichtung ferner ausgebildet, der Phasenregelschleife die Winkelabweichung zuzuführen. Vorteilhafterweise bewirkt die Regelung der Phasenregelschleife dann, dass eine Blindstromkomponente des ersten Stromraumzeigers stets einen verschwindenden Wert aufweist.

In einer bevorzugten Ausführungsform der Schaltungsanordnung ist die Steuervorrichtung ausgebildet, zum Erzeugen des dritten Modulationsraumzeigers über eine Clarke-Transformation die gemessenen Phasenströme in einen zweiten Stromraumzeiger zu transformieren, den zweiten Stromraumzeiger mit einem festgelegten virtuellen Widerstand zu multiplizieren, um einen zweiten Modulationsraumzeiger zu erhalten, und den zweiten Modulationsraumzeiger von dem ersten Modulationsraumzeiger zu subtrahieren, um den dritten Modulationsraumzeiger zu erhalten. Vorteilhafterweise fällt oder, im Falle einer Rückspeisung, steigt die Zwischenkreisspannung bei dieser Schaltungsanordnung dann abhängig vom Wert des virtuellen Widerstands entsprechend des Ohmschen Gesetzes proportional zu einem Laststrom. Dieses Verhalten hat den Vorteil, dass bei Erreichen eines vorgebbaren Maximalwerts der Zwischenkreisspannung ein optional zuschaltbarer Ballastwiderstand einen weiteren Spannungsanstieg verhindern kann. Außerdem kann bei Erreichen eines vorgebbaren maximalen Laststroms, also bei Erreichen eines durch die Netzspannung, den virtuellen Widerstand und des vorgegebenen maximalen Laststroms festgelegten Minimalwerts der Zwischenkreisspannung eine parallel geschaltete Diodengleichrichtung ohne Netzinduktivität den zusätzlich benötigten Strom übernehmen. Ein weiterer Vorteil ist, dass durch den nun erlaubten Spannungshub im Gleichspannungs-zwischenkreis kurzzeitige Spitzenleistungen im Zwischenkreiskondensator gespeichert oder aus diesem entnommen werden können.

Ein besonderer Vorteil der Schaltungsanordnung besteht darin, dass mehrere dieser Schaltungsanordnungen uneingeschränkt parallel geschaltet werden können. Dies ermöglicht eine bedarfsabhängige Zu- und Abschaltung einzelner Module im laufenden Betrieb, wodurch sich in allen Leistungssituationen ein besonders günstiger Wirkungsgrad ergibt.

Ein weiterer Vorteil der Schaltungsanordnung besteht in ihrer Robustheit. Auch bei weichen Netzen weist sie keine oder nur geringe Schwingneigung auf.

In einer zusätzlichen Weiterbildung der Schaltungsanordnung ist die Steuervorrichtung ausgebildet, mittels einer Raumzeigermodulation aus dem dritten Modulationsraumzeiger ein Ansteuersignal für den Frequenzumrichter zu erzeugen. Vorteilhafterweise kann der Frequenzumrichter selbst dann auf bekannte Weise, beispielsweise als IGBT-Wechselrichter, ausgebildet sein.

In einer bevorzugten Ausführungsform der Schaltungsanordnung ist der Frequenzumrichter ein IGBT-Wechselrichter. Vorteilhafterweise eignen sich IGBT-Wechselrichter zum Schalten hoher Leistungen.

Die Erfindung wird nachfolgend anhand von Figuren näher erläutert. Dabei zeigen:

Figur 1 eine Schaltungsanordnung eines ersten Zweiquadrantenstellers zur Erläuterung der Wirkungsweise eines virtuellen Innenwiderstands;

Figur 2 ein erstes Ersatzschaltbild für den ersten Zweiquadrantensteller;

Figur 3 eine Schaltungsanordnung eines zweiten Zweiquadrantenstellers ohne verlustbehafteten Widerstand;

Figur 4 eine Schaltungsanordnung eines dritten Zweiquadrantenstellers zur Erläuterung eines virtuellen Innenwiderstands;

Figur 5 ein Blockschaltbild eines ersten Einspeise-Rückspeise-Umrichters mit verlustbehaftetem Innenwiderstand;

Figur 6 ein einphasiges zweites Ersatzschaltbild zur Erläuterung einer Netzgrundschwingung;

Figur 7 ein einphasiges Zeigerdiagramm zur Erläuterung des Verhaltens von Betrag und Phase von Spannung und Strom;

Figur 8 ein Blockschaltbild eines zweiten Einspeise-Rückspeise-Umrichters mit virtuellem Innenwiderstand;

Figur 9 ein Blockschaltbild eines dritten Einspeise-Rückspeise-Umrichters mit virtuellem Innenwiderstand und geschlossenem Phasenregelkreis; und

Figur 10 eine schematische Schaltungsanordnung zur Erläuterung der Vorteile des dritten Einspeise-Rückspeise-Umrichters.

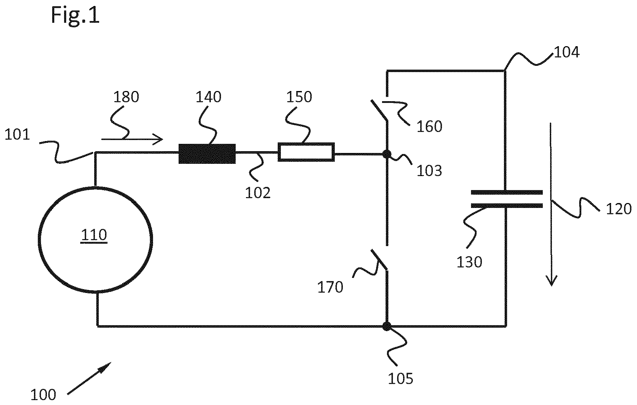

Unter Bezug auf Figuren 1 bis 4 wird zunächst die Wirkungsweise eines virtuellen Innenwiderstands anhand eines Zweiquadrantenstellers erläutert. Ein Zweiquadrantensteller ist eine elektronische Schaltung, die als Kombination eines Hochsetzstellers und eines Tiefsetzstellers verstanden werden kann. In einem Zweiquadrantensteller kann Energie von einer Quelle zu einem Verbraucher und vom Verbraucher zur Quelle fließen.

Figur 1 zeigt eine Schaltungsanordnung eines ersten Zweiquadrantenstellers 100. Die Schaltungsanordnung umfasst einen ersten Knoten 101, einen zweiten Knoten 102, einen dritten Knoten 103, einen vierten Knoten 104 und einen fünften Knoten 105. Zwischen dem ersten Knoten 101 und dem fünften Knoten 105 kann eine Eingangsspannung 110 angelegt werden. Zwischen dem vierten Knoten 104 und dem fünften Knoten 105 ist ein Kondensator 130 angeordnet, über dem eine Ausgangsspannung 120 abfällt. Zwischen dem ersten Knoten 101 und dem zweiten Knoten 102 ist eine Induktivität 140 angeordnet. Zwischen dem zweiten Knoten 102 und dem dritten Knoten 103 ist ein realer, also verlustbehafteter, Widerstand 150 angeordnet. Zwischen dem dritten Knoten 103 und dem vierten Knoten 104 ist ein erster Schalter 160 angeordnet. Der erste Schalter 160 könnte beispielsweise als Transistor ausgebildet sein. Zwischen dem dritten Knoten 103 und dem fünften Knoten 105 ist ein zweiter Schalter 170 angeordnet, der beispielsweise ebenfalls als Transistorschalter ausgebildet sein kann. Durch die Induktivität 140 fließt ein elektrischer Strom 180.

Die Ausgangsspannung 120 soll auf ein Vielfaches der Eingangsspannung 110 eingestellt werden, beispielsweise auf das 1,25-fache der Eingangsspannung 110. Hierzu werden der erste Schalter 160 und der zweite Schalter 170 wechselweise mit einem festgelegten Tastverhältnis a geöffnet und geschlossen. Die Induktivität 140 dient als Energiespeicher sowie zur Stromglättung. Der Widerstand 150 dämpft das schwingungsfähige, ansonsten ungeregelte System aus Induktivität 140 und Kondensator 130. Beträgt das Tastverhältnis a = 1/1,25 = 0,8, ist also der erste Schalter 160 80% einer Periodendauer und der zweite Schalter 170 20% einer Periodendauer eingeschaltet, so nimmt die Ausgangsspannung 120 den 1,25-fachen Wert der Eingangsspannung 110 an. Bei einem positiven Strom 180 verhält sich der erste Zweiquadrantensteller 100 wie ein Hochsetzsteller, bei einem negativen Strom 180 wie ein Tiefsetzsteller.

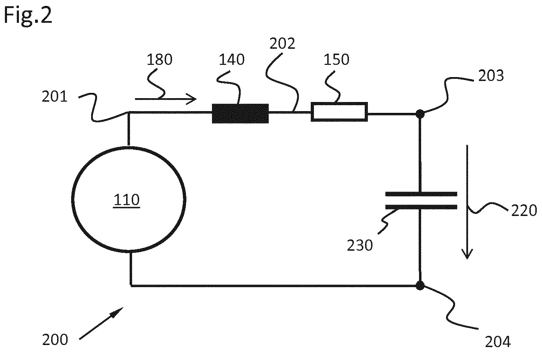

Ist die Schaltfrequenz, mit der der erste Schalter 160 und der zweite Schalter 170 geschaltet werden, deutlich höher als die Resonanzfrequenz des aus Widerstand 150, Induktivität 140 und Kondensator 130 gebildeten RLC-Schwingkreises, so kann der erste Zweiquadrantensteller 100 der Figur 1 durch ein in Figur 2 gezeigtes erstes Ersatzschaltbild 200 dargestellt werden.

Das erste Ersatzschaltbild 200 umfasst einen ersten Knoten 201, einen zweiten Knoten 202, einen dritten Knoten 203 und einen vierten Knoten 204. Die Eingangsspannung 110 liegt zwischen dem ersten Knoten 201 und dem vierten Knoten 204 an. Die Induktivität 140 ist zwischen dem ersten Knoten 201 und dem zweiten Knoten 202 angeordnet und wird durch den Strom 180 durchflossen. Der Widerstand 150 ist zwischen dem zweiten Knoten 202 und dem dritten Knoten 203 angeordnet. Zwischen dem dritten Knoten 203 und dem vierten Knoten 204 ist ein Ersatzkondensator 230 angeordnet, über dem eine Ersatzkondensatorspannung 220 abfällt.

Der Ersatzkondensator 230 weist eine Kapazität auf, die der Kapazität des Kondensators 130 des ersten Zweiquadrantenstellers 100 geteilt durch das Quadrat des Tastverhältnisses a entspricht. Die über dem Ersatzkondensator 230 abfallende Ersatzkondensatorspannung 220 entspricht dem Produkt der Ausgangsspannung 120 des ersten Zweiquadrantenstellers 100 und des Tastverhältnisses a. Die effektiv wirksame Kapazität des Ersatzkondensators 230 ist somit eine Funktion des Tastverhältnisses.

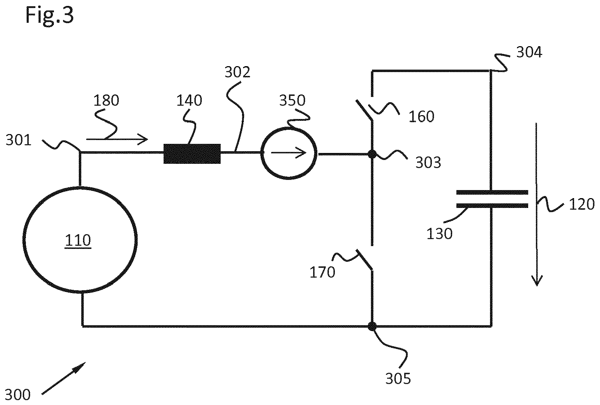

Figur 3 zeigt eine Schaltungsanordnung eines zweiten Zweiquadrantenstellers 300. Die Schaltungsanordnung umfasst einen ersten Knoten 301, einen zweiten Knoten 302, einen dritten Knoten 303, einen vierten Knoten 304 und einen fünften Knoten 305. Die Eingangsspannung 110 wird zwischen dem ersten Knoten 301 und dem fünften Knoten 305 angelegt. Der Kondensator 130 ist zwischen dem vierten Knoten 304 und dem fünften Knoten 305 angeordnet. Die Ausgangsspannung 120 fällt wiederum über dem Kondensator 130 ab. Zwischen dem ersten Knoten 301 und dem zweiten Knoten 302 ist die Induktivität 140 angeordnet, die vom Strom 180 durchflossen wird. Der erste Schalter 160 ist zwischen dem dritten Knoten 303 und dem vierten Knoten 304 angeordnet. Der zweite Schalter 170 ist zwischen dem dritten Knoten 303 und dem fünften Knoten 305 angeordnet.

Anstelle des verlustbehafteten Widerstands 150 weist der zweite Zweiquadrantensteller 300 zwischen dem zweiten Knoten 302 und dem dritten Knoten 303 eine gesteuerte Spannungsquelle 350 auf. Die gesteuerte Spannungsquelle 350 liegt zwischen dem zweiten Knoten 302 und dem dritten Knoten 303 eine Spannung u(t) in Abhängigkeit des Stroms 180 durch die Induktivität 140 an. Auf diese Weise können ein virtueller Widerstand $R_v$ und eine virtuelle Induktivität $L_v$ programmiert werden:

$$u(t) = R_v \cdot i(t) + L_v \cdot \frac{d}{dt} i(t) \ .$$

Hierbei bezeichnet i(t) den von der Zeit t abhängigen Wert des Stroms 180.

Der virtuelle Widerstand $R_v$ und die virtuelle Induktivität $L_v$ haben den Vorteil, dass an ihnen keine Verlustleistung anfällt.

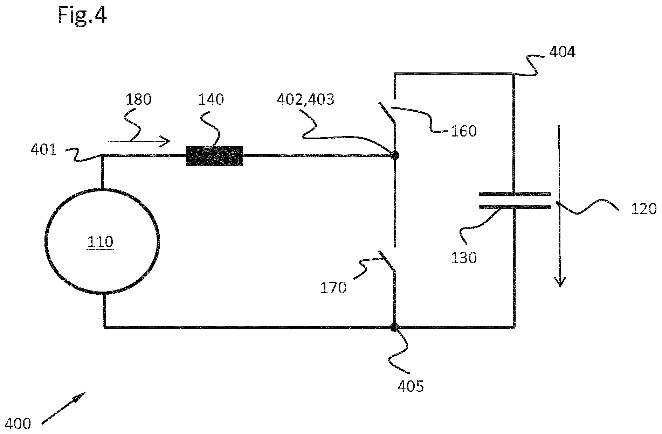

Figur 4 zeigt eine Schaltungsanordnung eines dritten Zweiquadrantenstellers 400. Die Schaltungsanordnung umfasst einen ersten Knoten 401, einen zweiten Knoten 402, einen dritten Knoten 403, einen vierten Knoten 404 und einen fünften Knoten 405. Der zweite Knoten 402 und der dritte Knoten 403 fallen bei der Schaltungsanordnung des dritten Zweiquadrantenstellers 400 allerdings zusammen. Die Eingangsspannung 110 wird zwischen dem ersten Knoten 401 und dem fünften Knoten 405 angelegt. Die Ausgangsspannung 120 fällt über dem Kondensator 130 ab, der zwischen dem vierten Knoten 404 und dem fünften Knoten 405 angeordnet ist. Die Induktivität 140 ist zwischen dem ersten Knoten 401 und dem zweiten Knoten 402 angeordnet und vom Strom 180 durchflossen. Der erste Schalter 160 ist zwischen dem dritten Knoten 403 und dem vierten Knoten 404 angeordnet. Der zweite Schalter 170 ist zwischen dem dritten Knoten 403 und dem fünften Knoten 405 angeordnet. Sowohl der Widerstand 150 als auch die gesteuerte Spannungsquelle 350 entfallen beim dritten Zweiquadrantensteller 400.

Stattdessen wird beim dritten Zweiquadrantensteller 400 das Tastverhältnis a, mit dem der erste Schalter 160 und der zweite Schalter 170 wechselweise geöffnet und geschlossen werden, als Funktion des Stroms 180 modifiziert. Das Tastverhältnis a wird dazu als

$$a(t) = 0{,}8 + i(t) \cdot \frac{R_v}{u_{dc}}$$

gewählt, um das Verhalten eines virtuellen Widerstands $R_v$ zu erreichen. Hierbei ist i(t) wiederum der von der Zeit t abhängige Strom 180. Mit $u_{dc}$ ist der sich ergebende Wert der Ausgangsspannung 120 bezeichnet.

Das Verhalten einer virtuellen Induktivität $L_v$ könnte durch einen zusätzlichen, additiven Term

$$L_v \cdot \frac{1}{u_{dc}} \cdot \frac{d}{dt} i(t)$$

erzielt werden.

Als virtueller Innenwiderstand kann beispielsweise ein Wert $R_v = 5$ Ohm gewählt werden.

Der Dämpfungsgrad $\xi$ beträgt

$$\xi = \frac{R_v}{2} \sqrt{\frac{C}{L}} \ .$$

Hierbei ist C die (berechnete) Kapazität des Kondensators 230 und L die Induktivität der Induktivität 140.

Für eine Mindestdämpfung beträgt die maximale Induktivität $L_{max}$

$$L_{max} = \frac{R_v^2 \cdot C}{4\xi^2} \ .$$

Falls der Reihenschwingkreis des dritten Zweiquadrantenstellers 400 nicht ausreichend gedämpft ist, so kann der Dämpfungsgrad $\xi$ durch eine zusätzliche, negative virtuelle Induktivität $L_v$ erhöht werden. Das RLC-System des dritten Zweiquadrantensteller 400 ist stabil, solange der virtuelle Widerstand $R_v$ positiv ist. Eine virtuelle Induktivität $L_v$ darf zwar negativ sein, die Summe $L + L_v$ muss jedoch größer 0 sein, um die Stabilität zu gewährleisten.

Bei einer Kapazität des Kondensators 230 von 2000 μF und einem virtuellen Widerstand $R_v = 5$ Ohm

ergibt sich bei einem gewünschten minimalen Dämpfungsgrad $\xi$ von 0,707 eine maximale Induktivität $L_{max}$ von 25 mH. Die minimal notwendige Induktivität $L_{min}$ zur Stromglättung ergibt sich maßgeblich aus dem zulässigen Stromrippel und der gewählten Schaltfrequenz, mit der die Schalter 160, 170 geschaltet werden.

Nachfolgend wird das anhand der Figuren 1 bis 4 erläuterte Prinzip nun für einen Betrieb an einem Dreiphasen-Drehstromnetz erweitert.

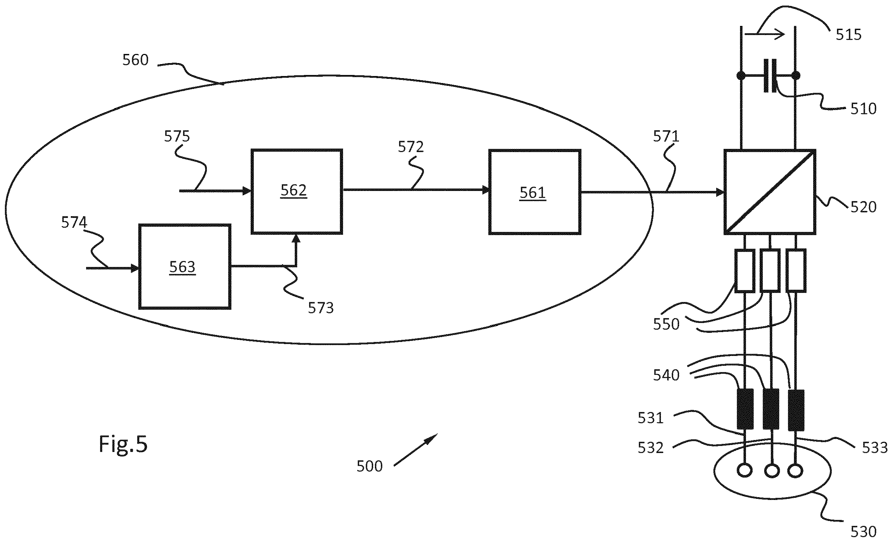

Figur 5 zeigt ein Blockschaltbild eines ersten Einspeise-Rückspeise-Umrichters 500. Der erste Einspeise-Rückspeise-Umrichter 500 weist einen Gleichspannungs-Zwischenkreis mit einem Zwischenkreiskondensator 510 auf, über den eine Zwischenkreisspannung 515 anliegt. Der Zwischenkreiskondensator 510 ist über einen Frequenzumrichter 520, drei Widerstände 550 und drei Glättungsinduktivitäten 540 mit einer ersten Phase 531, einer zweiten Phase 532 und einer dritten Phase 533 eines Dreiphasen-Drehstromnetzes 530 verbunden. Der Frequenzumrichter 520 kann beispielsweise ein Drei-Level-Umrichter mit einem guten Wirkungsgrad sein. Der erste Einspeise-Rückspeise-Umrichter 500 weist reale, verlustbehaftete Widerstände 550 zur Dämpfung und Strombegrenzung auf.

Der erste Einspeise-Rückspeise-Umrichter 500 weist eine erste Steuervorrichtung 560 zum Steuern des Frequenzumrichters 520 auf. Die erste Steuervorrichtung 560 kann als analoge Schaltung aufgebaut sein. Bevorzugt ist die erste Steuervorrichtung 560 jedoch digital realisiert.

Die erste Steuervorrichtung 560 umfasst eine Phasenregelschleife 563, die einen Winkel 573 bereitstellt, der zur Spannung der ersten Phase 531 des Dreiphasen-Drehstromnetzes 530 synchron ist. Der Phasenregelschleife 563 wird hierzu eine Winkelabweichung 574 zugeführt. Die Phasenregelschleife 563 regelt den Winkel 573 derart, dass die Winkelabweichung 574 minimiert wird.

In der ersten Steuervorrichtung 560 ist ferner ein Modulationsindex 575 festgelegt. Der Modulationsindex 575 und der Winkel 573 werden einer Vorrichtung zur inversen Park-Transformation 562 zugeführt. Die Vorrichtung zur inversen Park-Transformation 562 erzeugt einen sich drehenden ersten Modulationsraumzeiger 572. Der erste Modulationsraumzeiger 572 weist den Winkel 573 und eine von dem Modulationsindex 575 vorgegebene konstante Amplitude auf.

Der erste Modulationsraumzeiger 572 wird einer Vorrichtung zur Raumzeigermodulation 561 zugeführt, die daraus Ansteuersignale 571 generiert, mit denen der Frequenzumrichter 520 des ersten Einspeise-Rückspeise-Umrichters 500 angesteuert wird.

Falls der durch die Phasenregelschleife 563 bereitgestellte Winkel 573 synchron zur Spannung der ersten Phase 531 des Dreiphasen-Drehstromnetzes 530 ist, so entspricht eine netzspannungsseitige Ausgangsspannung des Frequenzumrichters 520 etwa der Netzspannung. Eine verbleibende Spannungsdifferenz bewirkt einen Stromfluss, der sich entsprechend der Widerstände 550 und der Induktivitäten 540 einstellt.

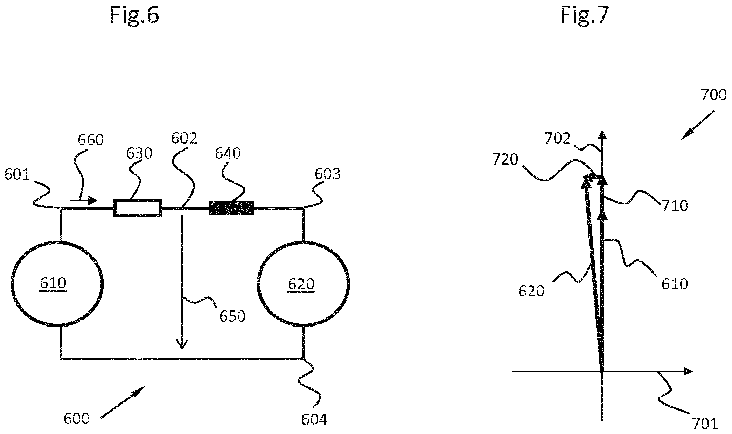

Figur 6 zeigt zur Erläuterung des Verhaltens von Betrag und Phase ein einphasiges zweites Ersatzschaltbild 600 für die Netzgrundschwingung von 50 Hz. Das zweite Ersatzschaltbild 600 umfasst einen ersten Knoten 601, einen zweiten Knoten 602, einen dritten Knoten 603 und einen vierten Knoten 604. Zwischen dem ersten Knoten 601 und dem vierten Knoten 604 liegt eine Umrichterspannung 610 an. Zwischen dem dritten Knoten 603 und dem vierten Knoten 604 liegt eine Netzspannung 620 an. Zwischen dem ersten Knoten 601 und dem zweiten Knoten 602 ist ein Widerstand 630 angeordnet, der durch einen Strom 660 durchflossen wird. Zwischen dem zweiten Knoten 602 und dem dritten Knoten 603 ist eine Induktivität 640 angeordnet. Zwischen dem zweiten Knoten 602 und dem vierten Knoten 604 liegt eine Spannung 650 an, deren Wert der Differenz aus der Umrichterspannung 610 und dem Produkt der Stromstärke des Stroms 660 und des Widerstandswerts des Widerstands 630 entspricht. Der Strom 660 fließt dann, wenn sich die Netzspannung 620 und die Umrichterspannung 610 in Phase oder Amplitude unterscheiden.

Figur 7 zeigt ein Zeigerdiagramm 700 mit einer Blindachse 701 und einer Wirkachse 702. Dargestellt sind die Beträge und Phasen der Umrichterspannung 610, der Netzspannung 620, der über den Widerstand 630 abfallenden Spannung 710 und der über die Induktivität 640 abfallenden Spannung 720.

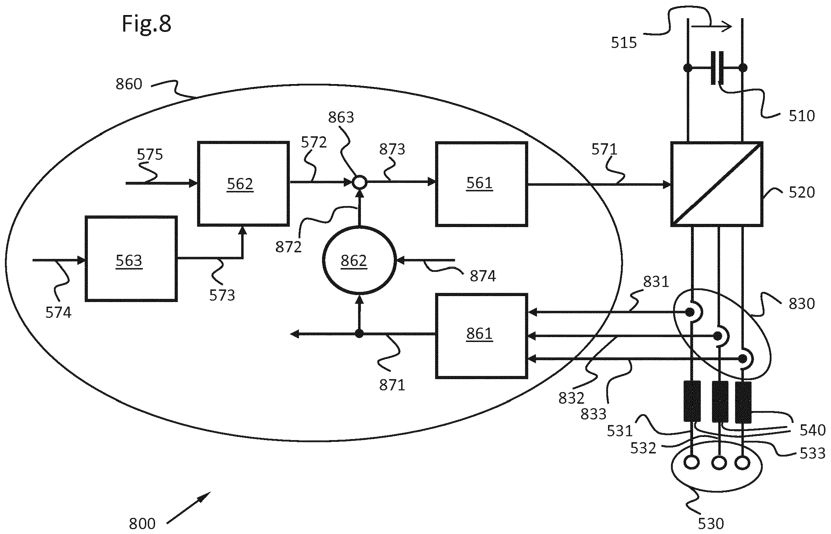

Figur 8 zeigt ein schematisches Blockschaltbild eines zweiten Einspeise-Rückspeise-Umrichters 800. Der zweite Einspeise-Rückspeise-Umrichter 800 stellt eine Erweiterung des ersten Einspeise-Rückspeise-Umrichters 500 der Figur 5 dar. Auch der zweite Einspeise-Rückspeise-Umrichter 800 weist einen Zwischenkreis mit einem Zwischenkreiskondensator 510 auf, an dem eine Zwischenkreisspannung 515 anliegt. Der Zwischenkreiskondensator 510 ist über einen Frequenzumrichter 520 mit der ersten Phase 531, der zweiten Phase 532 und der dritten Phase 533 des Dreiphasen-Drehstromnetzes 530 verbunden. Wiederum sind zwischen den Phasen 531, 532, 533 des Dreiphasen-Drehstromnetzes 530 Glättungsinduktivitäten 540 vorhanden. Die realen, verlustbehafteten Widerstände 550 des ersten Einspeise-Rückspeise-Umrichters 500 der Figur 5 entfallen allerdings und sind durch einen virtuellen Widerstand ersetzt, wie nachfolgend erläutert wird.

Anstelle der ersten Steuervorrichtung 560 des ersten Einspeise-Rückspeise-Umrichters 500 weist der zweite Einspeise-Rückspeise-Umrichter 800 eine zweite Steuervorrichtung 860 auf. Die zweite Steuervorrichtung 860 kann als analoge Schaltung aufgebaut sein. Bevorzugt ist die zweite Steuervorrichtung 860 jedoch digital realisiert.

Die zweite Steuervorrichtung 860 umfasst eine Phasenregelschleife 563, der eine Winkelabweichung 574 zugeführt wird, und die einen Winkel 573 ausgibt, der synchron zur Spannung der ersten Phase 531 des Dreiphasen-Drehstromnetzes 530 ist. Eine Vorrichtung zur inversen Park-Transformation 562 erzeugt wieder einen ersten Modulationsraumzeiger 572 mit dem Winkel 573 und einer Amplitude, die durch einen Modulationsindex 575 festgelegt ist.

Der zweite Einspeise-Rückspeise-Umrichter 800 weist eine Strommessvorrichtung 830 auf, die dazu vorgesehen ist, einen in der ersten Phase 531 des Dreiphasen-Drehstromnetzes 530 fließenden ersten Phasenstrom 831, einen in der zweiten Phase 532 fließenden zweiten Phasenstrom 832 und einen in der dritten Phase 533 fließenden dritten Phasenstrom 833 zu messen.

Die gemessenen Stromstärken 831, 832, 833 werden einer von der zweiten Steuervorrichtung 860 umfassten Vorrichtung zur Clarke-Transformation 861 übergeben. Die Vorrichtung zur Clarke-Transformation 861 transformiert den dreiphasigen Phasenstrom 831, 832, 833 in einen zweiachsigen zweiten Stromraumzeiger 871.

Eine von der zweiten Steuervorrichtung 860 umfasste erste Vorrichtung zur Multiplikation 862 multipliziert den zweiten Stromraumzeiger 871 mit einem festgelegten virtuellen Widerstand 874, um einen zweiten Modulationsraumzeiger 872 zu erhalten. Der zweite Modulationsraumzeiger 872 wird anschließend von einer Vorrichtung zur Subtraktion 863 vom ersten Modulationsraumzeiger 572 subtrahiert, um einen dritten Modulationsraumzeiger 873 zu erhalten. Dadurch wird bei ausreichend hoher Schaltfrequenz des Umrichters ein Verhalten erreicht, das dynamisch dem Verhalten von realen Widerständen entspricht. Allerdings ist der virtuelle Widerstand 874 vorteilhafterweise nicht verlustbehaftet.

Der dritte Modulationsraumzeiger 873 wird einer Vorrichtung zur Raumzeigermodulation 561 zugeführt, die daraus Ansteuersignale 571 generiert, mit denen der Frequenzumrichter 520 des zweiten Einspeise-Rückspeise-Umrichters 800 angesteuert wird.

Der aus dem Zwischenkreiskondensator 510, dem Frequenzumrichter 520 und den Glättungsinduktivitäten 540 bestehende Leistungskreis des zweiten Einspeise-Rückspeise-Umrichters 800 entspricht dem eines herkömmlichen Einspeise-Rückspeise-Umrichters. Allerdings wird zur Ansteuerung des Frequenzumrichters 520 anstelle einer Kaskadenregelung der virtuelle Widerstand 874 und der Modulationsindex 575 modelliert. Der Frequenzumrichter 520 ist bevorzugt ein IGBT-Wechselrichter. Besonders vorteilhaft ist der Einsatz eines Drei-Level-Umrichters.

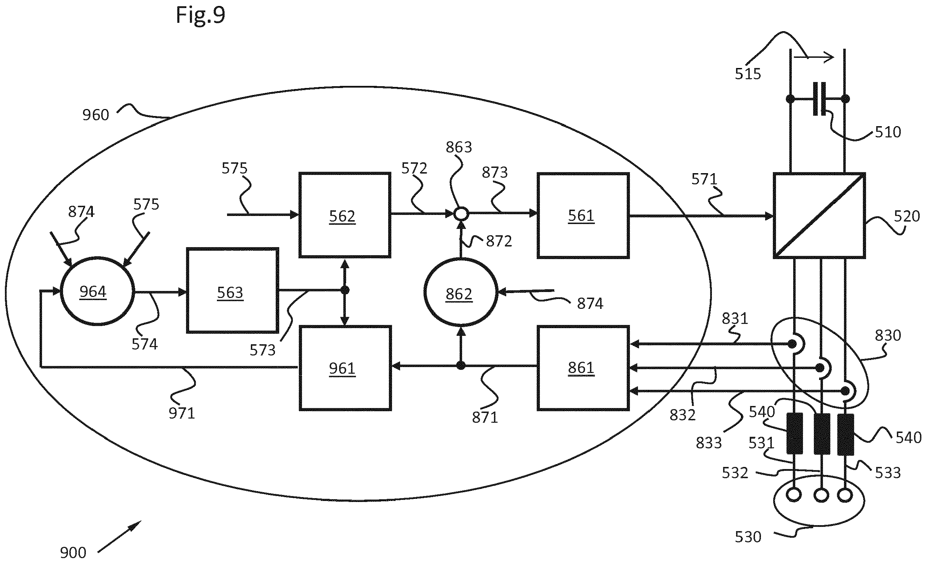

Figur 9 zeigt ein Blockschaltbild eines dritten Einspeise-Rückspeise-Umrichters 900. Der dritte Einspeise-Rückspeise-Umrichter 900 ist eine weitere Erweiterung des zweiten Einspeise-Rückspeise-Umrichters 800 der Figur 8 und des ersten Einspeise-Rückspeise-Umrichters 500 der Figur 5.

Der dritte Einspeise-Rückspeise-Umrichter 900 weist wieder einen Zwischenkreis mit einem Zwischenkreiskondensator 510 auf, über dem eine Zwischenkreisspannung 515 abfällt. Der Zwischenkreiskondensator 510 ist über einen Frequenzumrichter 520, bevorzugt einen IGBT-Wechselrichter, und Glättungsinduktivitäten 540 mit einer ersten Phase 531, einer zweiten Phase 532 und einer dritten Phase 533 eines Dreiphasen-Drehstromnetzes 530 verbunden.

Eine Strommessvorrichtung 830 ist dazu vorgesehen, Stromstärken eines in der ersten Phase 531 fließenden ersten Phasenstroms 831, eines in der zweiten Phase 532 fließenden zweiten Phasenstroms 832 und eines in der dritten Phase 533 fließenden dritten Phasenstroms 833 zu messen.

Anstelle der zweiten Steuervorrichtung 860 des zweiten Einspeise-Rückspeise-Umrichters 800 der Figur 8 weist der dritte Einspeise-Rückspeise-Umrichter 900 eine dritte Steuervorrichtung 960 auf. Die dritte Steuervorrichtung 960 kann wiederum als analoge Schaltung aufgebaut sein, ist bevorzugt jedoch digital realisiert.

Eine Phasenregelschleife 563 der dritten Steuervorrichtung 960 empfängt eine Winkelabweichung 574 und generiert einen Winkel 573, der synchron zur Spannung der ersten Phase 531 des Dreiphasen-Drehstromnetzes 530 ist. Eine Vorrichtung zur inversen Park-Transformation 562 erzeugt einen ersten Modulationsraumzeiger 572 mit dem Winkel 573 und einer durch einen festgelegten Modulationsindex 575 festgelegten Amplitude.

Eine Vorrichtung zur Clarke-Transformation 861 der dritten Steuervorrichtung 960 transformiert die dreikomponentige Phasenstromstärke 831, 832, 833 in einen zweikomponentigen zweiten Stromraumzeiger 871. Eine erste Vorrichtung zur Multiplikation 862 multipliziert den zweiten Stromraumzeiger 871 mit einem festgelegten virtuellen Widerstand 874, um einen zweiten Modulationsraumzeiger 872 zu erhalten. Eine Vorrichtung zur Subtraktion 863 subtrahiert den zweiten Modulationsraumzeiger 872 vom ersten Modulationsraumzeiger 572, um einen dritten Modulationsraumzeiger 873 zu erhalten. Eine Vorrichtung zur Raumzeigermodulation 561 erzeugt aus dem dritten Modulationsraumzeiger 873 Ansteuersignale 571, mit denen der Frequenzumrichter 520 angesteuert wird. Zusammen mit der Zwischenkreisspannung 515 ergibt sich die netzspannungsseitige Ausgangsspannung des Frequenzumrichters 520.

Im Unterschied zur zweiten Steuervorrichtung 860 des zweiten Einspeise-Rückspeise-Umrichters 800 weist die dritte Steuervorrichtung 960 des dritten Einspeise-Rückspeise-Umrichters 900 zusätzlich eine Vorrichtung zur Park-Transformation 961 auf, die den dreikomponentig gemessenen Phasenstrom 831, 832, 833 in einen zweikomponentigen ersten Stromraumzeiger 971 transformiert. Mathematisch ist es alternativ möglich, den ersten Stromraumzeiger 971 aus dem durch die Vorrichtung zur Clarke-Transformation 861 gewonnenen zweiten Stromraumzeiger 871 zu gewinnen, weshalb die Vorrichtung zur Park-Transformation 961 im Blockschaltbild der Figur 9 als der Vorrichtung zur Clarke-Transformation 861 nachfolgend dargestellt ist.

Der erste Stromraumzeiger 971 weist eine Wirkkomponente und eine Blindkomponente auf. Die Wirkkomponente wird häufig durch einen Index d (direct axis), die Blindkomponente durch einen Index q (quadratur axis) gekennzeichnet. Die an die Phasenregelschleife 563 gestellte Anforderung, den Winkel 573 derart einzuregeln, dass der Winkel 573 synchron zur ersten Phase 531 des Dreiphasen-Drehstromnetzes 530 ist, entspricht der Forderung, dass die Blindstromkomponente des ersten Stromraumzeigers 971 verschwindet, also auf null geregelt wird. Ist dies der Fall, dann liegen der erste Modulationsraumzeiger 572 und der Phasenstrom 831, 832, 833 in Phase.

Optional könnte jedoch auch eine von null verschiedene Phasenverschiebung vorgegeben werden.

Um die Blindstromkomponente des ersten Stromraumzeigers 971 auf null zu regeln, wird diese Blindstromkomponente von einer zweiten Vorrichtung zur Multiplikation 964 der zweiten Steuervorrichtung 960 mit einem Quotienten aus dem festgelegten virtuellen Widerstand 874 und dem festgelegten Modulationsindex 575 multipliziert, um die Winkelabweichung 574 zu gewinnen. Diese Winkelabweichung 574 wird der Phasenregelschleife 563 zugeführt. Damit ist der Phasenregelkreis bei der dritten Steuervorrichtung 960 des dritten Einspeise-Rückspeise-Umrichters 900 geschlossen.

Der dritte Einspeise-Rückspeise-Umrichter 900 muss am Betriebsbeginn mit einer Vorladeschaltung initialisiert werden, wie einem Fachmann offensichtlich ist und hier nicht detailliert dargestellt wird.

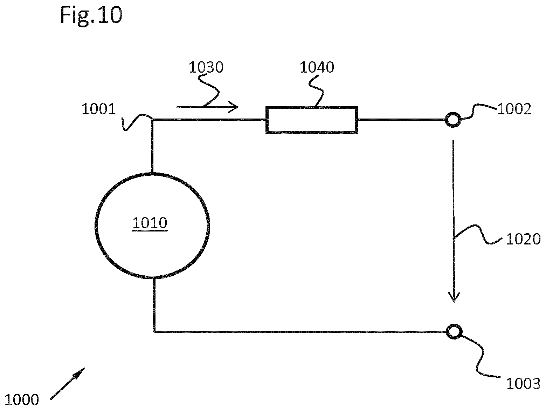

Beim dritten Einspeise-Rückspeise-Umrichter 900 ist keine aktive Strom- oder Spannungsregelung im Zwischenkreis erforderlich. Stattdessen stellt sich die Zwischenkreisspannung 515 ungeregelt in Abhängigkeit von der Spannung des Dreiphasen-Drehstromnetzes 530 und einem Laststrom im Zwischenkreis ein. Das gewünschte Verhalten kann dabei durch Parametrierung des virtuellen Widerstands 874 und den Modulationsindex 575 eingestellt werden. Dies wird nachfolgend anhand von Figur 10 erläutert.

Figur 10 zeigt eine schematische Darstellung eines Zwischenkreises 1000. Die Schaltung umfasst einen ersten Knoten 1001, einen zweiten Knoten 1002 und einen dritten Knoten 1003.

Zwischen dem ersten Knoten 1001 und dem dritten Knoten 1003 liegt eine Leerlaufspannung 1010 an, die dem Modulationsindex 575 des dritten Einspeise-Rückspeise-Umrichters 900 entspricht. Diese Leerlaufspannung 1010 wird größer als der Betrag der Netzspannung des Dreiphasen-Drehstromnetzes 530 gewählt. Beispielsweise kann die Leerlaufspannung 1010 ein 1,6-faches des Betrags der Netzspannung betragen. Bei einem Dreiphasen-Drehstromnetz 530 mit 400 V betrüge die Leerlaufspannung 1010 dann beispielsweise 640 V.

Zwischen dem ersten Knoten 1001 und dem zweiten Knoten 1002 ist ein virtueller Widerstand 1040 angeordnet, der dem virtuellen Widerstand 874 des dritten Einspeise-Rückspeise-Umrichters 900 entspricht. Der virtuelle Widerstand 1040 wird von einem Laststrom 1030 durchflossen.

Zwischen dem zweiten Knoten 1002 und dem dritten Knoten 1003 liegt eine Zwischenkreisspannung 1020 an, die der Zwischenkreisspannung 515 des dritten Einspeise-Rückspeise-Umrichters 900 entspricht.

Wird für den virtuellen Widerstand 1040 ein beispielhafter Wert von 5 Ohm gewählt, so sinkt die Zwischenkreisspannung 1020 entsprechend dem Ohmschen Gesetz pro Ampere des Laststroms 1030 um 5 V. Im Falle einer Rückspeisung von Energie, also eines negativen Laststroms 1030, würde die Zwischenkreisspannung 1020 entsprechend proportional zum Laststrom 1030 steigen. Die Zwischenkreisspannung 1020 stellt sich somit in Abhängigkeit von der Leerlaufspannung 1010 und dem Laststrom 1030 ein.

Durch die Wahl der Werte des virtuellen Widerstands 1040, beziehungsweise des virtuellen Widerstands 874 des dritten Einspeise-Rückspeise-Umrichters 900, und der Leerlaufspannung 1010, beziehungsweise des Modulationsindex 575 des dritten Einspeise-Rückspeise-Umrichters 900, kann die Nachgiebigkeit der Zwischenkreisspannung 1020, beziehungsweise der Zwischenkreisspannung 515 des dritten Einspeise-Rückspeise-Umrichters 900, eingestellt werden. Der Wert des virtuellen Widerstands 1040, 874 gibt an, wie stark die Zwischenkreisspannung 1020, 515 mit dem Laststrom 1030 fällt oder steigt.

Erreicht die Zwischenkreisspannung 1020, 515 einen festgelegten Maximalwert, beispielsweise 740 V bei einem Laststrom vom -20 A und einem virtuellen Widerstand von 5 Ohm, so kann ein optional zuschaltbarer Ballastwiderstand einen weiteren Anstieg der Zwischenkreisspannung 1020, 515 verhindern. Erreicht die Zwischenkreisspannung 1020, 515 dagegen einen Minimalwert von beispielsweise 540 V bei einem Laststrom von +20 A und einem virtuellen Widerstand von 5 Ohm, so kann ein parallel geschalteter Diodengleichrichter ohne Netzinduktivität den zusätzlich benötigten Strom übernehmen. Der Diodengleichrichter und der Ballastwiderstand können entweder im dritten Einspeise-Rückspeise-Umrichter 900 vorgesehen sein oder modular als eigenständige Module verschaltet werden.

Der beim dritten Einspeise-Rückspeise-Umrichter 900 erlaubte Spannungshub der Zwischenkreisspannung 515 ermöglicht es vorteilhafterweise, dass kurzzeitige Spitzenleistungen im Zwischenkreiskondensator 510 gespeichert oder aus dem Zwischenkreiskondensator 510 entnommen werden. Weist der Zwischenkreiskondensator 510 beispielsweise eine Kapazität von 1000 μF auf und wird ein Anstieg der Zwischenkreisspannung 515 von einem Wert von 640 V bis zu einem Wert von 740 V erlaubt, so kann im Zwischenkreiskondensator 510 eine Energie von 69 Ws gespeichert werden.

Ein weiterer Vorteil des dritten Einspeise-Rückspeise-Umrichters 900 ist, dass mehrere dritte Einspeise-Rückspeise-Umrichter 900 uneingeschränkt parallel geschaltet werden können. Ein elektrischer Strom teilt sich dann sowohl in Lastals auch in Rückspeiserichtung entsprechend der virtuellen Widerstände 874 der dritten Einspeise-Rückspeise-Umrichter 900 auf. Dies gilt auch für durch die dritten Einspeise-Rückspeise-Umrichter 900 versorgte Geräte unterschiedlicher Baugröße, wenn die virtuellen Widerstände 874 der dritten Einspeise-Rückspeise-Umrichter 900 jeweils umgekehrt proportional zu den Nennleistungen dieser Geräte ausgelegt werden.

Der resultierende Gesamtwiderstand ergibt sich dabei aus der Parallelschaltung der virtuellen Widerstände 874 der dritten Einspeise-Rückspeise-Umrichter 900.

Ein weiterer Vorteil des dritten Einspeise-Rückspeise-Umrichters 900 ist, dass einzelne dritte Einspeise-Rückspeise-Umrichter 900 während eines laufenden Betriebs nach Bedarf zu- oder abgeschaltet werden können. Dies ermöglicht es, die dritten Einspeise-Rückspeise-Umrichter 900 bedarfsgerecht mit jeweils optimalem Wirkungsgrad zu betreiben.

Ein weiterer Vorteil des dritten Einspeise-Rückspeise-Umrichters 900 ist, dass dieser keine Schwingneigung aufweist. Dies gilt auch für einen Einsatz in weichen Netzen.

Der dritte Einspeise-Rückspeise-Umrichter 900 kann auch einphasig betrieben werden. Hierzu ist lediglich eine für einen Fachmann triviale Anpassung des Phasenregelkreises der dritten Steuervorrichtung 960 des dritten Einspeise-Rückspeise-Umrichters 900 erforderlich.

Bezugszeichenliste

| | |
|---|---|
| 100 | erster Zweiquadrantensteller |
| 101 | erster Knoten |
| 102 | zweiter Knoten |
| 103 | dritter Knoten |
| 104 | vierter Knoten |
| 105 | fünfter Knoten |
| 110 | Eingangsspannung |
| 120 | Ausgangsspannung |
| 130 | Kondensator |
| 140 | Induktivität |
| 150 | Widerstand |
| 160 | erster Schalter |
| 170 | zweiter Schalter |
| 180 | Strom |
| | |
| 200 | erstes Ersatzschaltbild |
| 201 | erster Knoten |
| 202 | zweiter Knoten |
| 203 | dritter Knoten |
| 204 | vierter Knoten |
| 220 | Ersatzkondensatorspannung |
| 230 | Ersatzkondensator |
| | |
| 300 | zweiter Zweiquadrantensteller |

301 erster Knoten
302 zweiter Knoten
303 dritter Knoten
304 vierter Knoten
305 fünfter Knoten
350 gesteuerte Spannungsquelle

400 dritter Zweiquadrantensteller
401 erster Knoten
402 zweiter Knoten
403 dritter Knoten
404 vierter Knoten
405 fünfter Knoten

500 erster Einspeise-Rückspeise-Umrichter
510 Zwischenkreiskondensator
515 Zwischenkreisspannung
520 Frequenzumrichter
530 Dreiphasen-Drehstromnetz
531 erste Phase u
532 zweite Phase v
533 dritte Phase w
540 Glättungsinduktivitäten
550 Widerstände
560 erste Steuervorrichtung
561 Vorrichtung zur Raumzeigermodulation
562 Vorrichtung zur inversen Park-Transformation
563 Phasenregelschleife
571 Ansteuersignal
572 erster Modulationsraumzeiger u_1
573 Winkel phi_u
574 Winkelabweichung delta_phi
575 Modulationsindex U_0

600 zweites Ersatzschaltbild
601 erster Knoten
602 zweiter Knoten
603 dritter Knoten
604 vierter Knoten
610 Umrichterspannung
620 Netzspannung
630 Widerstand
640 Induktivität
650 Spannung
660 Strom

700 Zeigerdiagramm
701 Wirkachse q
702 Blindachse d
710 Widerstandsspannung
720 Spulenspannung

800 zweiter Einspeise-Rückspeise-Umrichter
830 Strommessvorrichtung
831 erster Phasenstrom i_u
832 zweiter Phasenstrom i_v
833 dritter Phasenstrom i_w
860 zweite Steuervorrichtung

861 Vorrichtung zur Clarke-Transformation
862 erste Vorrichtung zur Multiplikation
863 Vorrichtung zur Subtraktion
871 zweiter Stromraumzeiger i_ab
872 zweiter Modulationsraumzeiger u_R
873 dritter Modulationsraumzeiger u_s
874 virtueller Widerstand R_v

900 dritter Einspeise-Rückspeise-Umrichter
960 dritte Steuervorrichtung
961 Vorrichtung zur Park-Transformation
964 zweite Vorrichtung zur Multiplikation
971 erster Stromraumzeigers i_dq

1000 Zwischenkreis
1001 erster Knoten
1002 zweiter Knoten
1003 dritter Knoten
1010 Leerlaufspannung
1020 Zwischenkreisspannung
1030 Laststrom
1040 virtueller Widerstand

**Patentansprüche**

1. Verfahren zum Ansteuern eines Frequenzumrichters (520), wobei das Verfahren die folgenden Schritte aufweist:

- Messen von in Phasenleitern (531, 532, 533) eines Dreiphasen-Drehstromnetzes (530) fließenden Phasenströmen (831, 832, 833);
- Erzeugen eines ersten Modulationsraumzeigers (572), der mit dem Phasenstrom (831, 832, 833) in Phase ist und damit einen zu einer Netzspannung des Dreiphasen-Drehstromnetzes (530) synchronen Winkel (573) aufweist, und der einen festgelegten Modulationsindex (575) als Amplitude aufweist;
- Durchführen einer Clarke-Transformation (861), um die gemessenen Phasenströme (831, 832, 833) in einen zweiten Stromraumzeiger (871) zu transformieren;
- Multiplizieren des zweiten Stromraumzeigers (871) mit einem festgelegten virtuellen Widerstand (874), um einen zweiten Modulationsraumzeiger (872) zu erhalten;
- Subtrahieren des zweiten Modulationsraumzeigers (872) von dem ersten Modulationsraumzeiger (572), um einen dritten Modulationsraumzeiger (873) zu erhalten;
- Modulieren des Frequenzumrichters (520) gemäß des dritten Modulationsraumzeigers (873),

wobei das Erzeugen des ersten Modulationsraumzeigers (572) die folgenden Schritte umfasst:

- Durchführen einer Park-Transformation (961) unter Verwendung des Winkels (573), um die gemessenen Phasenströme (831, 832, 833) in einen ersten Stromraumzeiger (971) zu transformieren;

- Regeln des Winkels (573) derart, dass eine Blindstromkomponente des ersten Stromraumzeigers (971) verschwindet, wobei die Blindstromkomponente des ersten Stromraumzeigers (971) mit einem Quotienten aus dem festgelegten virtuellen Widerstand (874) und dem festgelegten Modulationsindex (575) multipliziert wird, um eine Winkelabweichung (574) zu erhalten, und die Winkelabweichung (574) einer Phasenregelschleife (563) zugeführt wird, um den Winkel (573) zu regeln;

- Erzeugen des ersten Modulationsraumzeigers (572), der den Winkel (573) und den festgelegten Modulationsindex (575) als Amplitude aufweist, mittels einer inversen Park-Transformation (562).

2. Verfahren gemäß Anspruch 1,
   wobei mittels einer Raumzeigermodulation (561) aus dem dritten Modulationsraumzeiger (873) ein Ansteuersignal (571) für den Frequenzumrichter (520) erzeugt wird.

3. Schaltungsanordnung (900) zum Erzeugen einer Zwischenkreisspannung (515) aus einer Netzspannung eines Dreiphasen-Drehstromnetzes (530),
   mit einem Zwischenkreiskondensator (510), der über einen Frequenzumrichter (520) und Glättungsinduktivitäten (540) mit einem ersten Phasenleiter (531), einem zweiten Phasenleiter (532) und einem dritten Phasenleiter (533) eines Dreiphasen-Drehstromnetzes (530) verbindbar ist,
   mit einer Messvorrichtung (830) zum Messen in den Phasenleitern (531, 532, 533) fließender Phasenströme (831, 832, 833),
   und mit einer Steuervorrichtung (960), die dazu vorgesehen ist, den Frequenzumrichter (520) anzusteuern,
   **dadurch gekennzeichnet, dass** die Steuervorrichtung (960) ausgebildet ist,
   einen ersten Modulationsraumzeiger (572) zu erzeugen, der mit dem Phasenstrom (831, 832, 833) in Phase ist und damit einen zu einer Netzspannung des Dreiphasen-Drehstromnetzes (530) synchronen Winkel (573) aufweist, und der einen festgelegten Modulationsindex (575) als Amplitude aufweist,
   über eine Clarke-Transformation (861) die gemessenen Phasenströme (831, 832, 833) in einen zweiten Stromraumzeiger (871) zu transformieren,
   den zweiten Stromraumzeiger (871) mit einem festgelegten virtuellen Widerstand (874) zu multiplizieren, um einen zweiten Modulationsraumzeiger (872) zu erhalten,

und den zweiten Modulationsraumzeiger (872) von dem ersten Modulationsraumzeiger (572) zu subtrahieren, um einen dritten Modulationsraumzeiger (873) zu erhalten,
und den Frequenzumrichter (520) gemäß des dritten Modulationsraumzeigers (873) zu modulieren,
wobei die Steuervorrichtung (960) ausgebildet ist, zum Erzeugen des ersten Modulationsraumzeigers (572)
über eine Park-Transformation (961) unter Verwendung des Winkels (573) die gemessenen Phasenströme (831, 832, 833) in einen ersten Stromraumzeiger (971) zu transformieren,
eine Blindstromkomponente des ersten Stromraumzeigers (971) mit einem Quotienten aus dem festgelegten virtuellen Widerstand (874) und dem festgelegten Modulationsindex (575) zu multiplizieren, um eine Winkelabweichung (574) zu erhalten, und einer Phasenregelschleife (563) die Winkelabweichung (574) zuzuführen, um den Winkel (573) derart zu regeln, dass die Blindstromkomponente des ersten Stromraumzeigers (971) verschwindet,
und über eine inverse Park-Transformation (562) den ersten Modulationsraumzeiger (572) zu erzeugen, der den Winkel (573) und den festgelegten Modulationsindex (575) als Amplitude aufweist.

4. Schaltungsanordnung (900) gemäß Anspruch 3,
   wobei die Steuervorrichtung (960) ausgebildet ist, mittels einer Raumzeigermodulation (561) aus dem dritten Modulationsraumzeiger (873) ein Ansteuersignal (571) für den Frequenzumrichter (520) zu erzeugen.

5. Schaltungsanordnung (900) gemäß einem der Ansprüche 3 und 4,
   wobei der Frequenzumrichter (520) ein IGBT-Wechselrichter ist.

**Claims**

1. Method for actuating a frequency converter (520), wherein the method has the following steps:

   - measuring phase currents (831, 832, 833) flowing in phase conductors (531, 532, 533) of a three-phase system (530);
   - generating a first modulation space vector (572) that is in phase with the phase current (831, 832, 833) and hence has an angle (573) in sync with a system voltage of the three-phase system (530), and that has a stipulated modulation index (575) as amplitude;
   - performing a Clarke transformation (861) in order to transform the measured phase currents (831, 832, 833) into a second current space vector (871);

- multiplying the second current space vector (871) by a stipulated virtual resistance (874) in order to obtain a second modulation space vector (872);
- subtracting the second modulation space vector (872) from the first modulation space vector (572) in order to obtain a third modulation space vector (873);
- modulating the frequency converter (520) in accordance with the third modulation space vector (873),

wherein the generating of the first modulation space vector (572) comprises the following steps:

- performing a Park transformation (961) to use the angle (573) in order to transform the measured phase current (831, 832, 833) into a first current space vector (971);
- adjusting the angle (573) such that a reactive current component of the first current space vector (971) disappears, wherein the reactive current component of the first current space vector (971) is multiplied by a quotient of the stipulated virtual resistance (874) and the stipulated modulation index (575) in order to obtain an angle difference (574), and the angle difference (574) is supplied to a phase locked loop (563) in order to adjust the angle (573);
- generating the first modulation space vector (572), which has the angle (573) and the stipulated modulation index (575) as amplitude, by means of an inverse Park transformation (562).

2. Method according to Claim 1,
   wherein a space vector modulation (561) is used to generate an actuation signal (571) for the frequency converter (520) from the third modulation space vector (873).

3. Circuit arrangement (900) for generating a DC-link voltage (515) from a system voltage of a three-phase system (530),
   having a DC-link capacitor (510) connectable to a first phase conductor (531), a second phase conductor (532) and a third phase conductor (533) of a three-phase system (530) via a frequency converter (520) and smoothing inductances (540),
   having a measuring apparatus (830) for measuring phase currents (831, 832, 833) flowing in the phase conductors (531, 532, 533),
   and having a control apparatus (960) that is intended to actuate the frequency converter (520), **characterized in that** the control apparatus (960) is designed to generate a first modulation space vector (572) that is in phase with the phase current (831, 832, 833) and hence has an angle (573) in sync with a system voltage of the three-phase system (530), and that has a stipulated modulation index (575) as amplitude,
to use a Clarke transformation (861) to transform the measured phase currents (831, 832, 833) into a second current space vector (871),
to multiply the second current space vector (871) by a stipulated virtual resistance (874) in order to obtain a second modulation space vector (872),
and to subtract the second modulation space vector (872) from the first modulation space vector (572) in order to obtain a third modulation space vector (873),
and to modulate the frequency converter (520) in accordance with the third modulation space vector (873),
wherein the control apparatus (960) is designed to generate the first modulation space vector (572) by using a Park transformation (961) to use the angle (573) to transform the measured phase currents (831, 832, 833) into a first current space vector (971),
multiplying a reactive current component of the first current space vector (971) by a quotient of the stipulated virtual resistance (874) and the stipulated modulation index (575) in order to obtain an angle difference (574), and supplying the angle difference (574) to a phase locked loop (563) in order to adjust the angle (573) such that the reactive current component of the first current space vector (971) disappears,
and using an inverse Park transformation (562) to generate the first modulation space vector (572), which has the angle (573) and the stipulated modulation index (575) as amplitude.

4. Circuit arrangement (900) according to Claim 3, wherein the control apparatus (960) is designed to use a space vector modulation (561) to generate an actuation signal (571) for the frequency converter (520) from the third modulation space vector (873).

5. Circuit arrangement (900) according to either of Claims 3 and 4,
   wherein the frequency converter (520) is an IGBT inverter.

**Revendications**

1. Procédé de commande d'un convertisseur de fréquence (520), dans lequel le procédé comprend les étapes qui consistent :

   - à mesurer des courants de phase (831, 832, 833) circulant dans des conducteurs de phase (531, 532, 533) d'un réseau à courant alternatif triphasé (530) ;
   - à générer un premier vecteur spatial de modulation (572) qui est en phase avec le courant de phase (831, 832, 833) et présente ainsi un angle (573) synchrone avec une tension réseau du réseau alternatif triphasé (530) et qui présente en tant qu'amplitude un indice de modulation défini (575) ;

- à effectuer une transformation de Clarke (861) pour transformer les courants de phase mesurés (831, 832, 833) en un deuxième vecteur spatial de courant (871) ;
- à multiplier le deuxième vecteur spatial de courant (871) par une résistance virtuelle définie (874) pour obtenir un deuxième vecteur spatial de modulation (872) ;
- soustraire le deuxième vecteur spatial de modulation (872) au premier vecteur spatial de modulation (572) pour obtenir un troisième vecteur spatial de modulation (873) ;
- moduler le convertisseur de fréquence (520) selon le troisième vecteur spatial de modulation (873),

dans lequel la génération du premier vecteur spatial de modulation (572) comprend les étapes qui consistent :

- à effectuer une transformation de Park (961) en utilisant l'angle (573) pour transformer les courants de phase mesurés (831, 832, 833) en un premier vecteur spatial de courant (971) ;
- réguler l'angle (573) de manière à faire disparaître une composante de courant réactif du premier vecteur spatial de courant (971), dans lequel la composante de courant réactif du premier vecteur spatial de courant (971) est multipliée par un quotient entre la résistance virtuelle définie (874) et de l'indice de modulation défini (575) pour obtenir un écart angulaire (574), et l'écart angulaire (574) est appliqué à une boucle de régulation de phase (563) pour réguler l'angle (573) ;
- à générer le premier vecteur spatial de modulation (572) présentant l'angle (573) et l'indice de modulation défini (575) en tant qu'amplitude au moyen d'une transformation de Park inverse (562).

2. Procédé selon la revendication 1,
dans lequel un signal de commande (571) destiné au convertisseur de fréquence (520) est généré à partir du troisième vecteur spatial de modulation (873) au moyen d'une modulation de vecteur spatial (561).

3. Ensemble circuit (900) destiné à générer une tension de circuit intermédiaire (515) à partir d'une tension réseau d'un réseau de courant alternatif triphasé (530),
comprenant un condensateur de circuit intermédiaire (510) pouvant être relié par l'intermédiaire d'un convertisseur de fréquence (520) et d'inductances de lissage (540) à un premier conducteur de phase (531), à un deuxième conducteur de phase (532) et à un troisième conducteur de phase (533) d'un de courant alternatif réseau triphasé (530),
comprenant un dispositif de mesure (830) destiné à mesurer des courants de phase (831, 832, 833) circulant dans les conducteurs de phase (531, 532, 533),
et comprenant un dispositif de commande (960) qui est destiné à attaquer le convertisseur de fréquence (520),
**caractérisé en ce que** le dispositif de commande (960) est conçu
pour générer un premier vecteur spatial de modulation (572) qui est en phase avec le courant de phase (831, 832, 833) et présente ainsi un angle (573) synchrone d'une tension réseau du réseau de courant alternatif triphasé (530) et qui présente en tant qu'amplitude un indice de modulation défini (575),
pour transformer les courants de phase mesurés (831, 832, 833) en un deuxième vecteur spatial de courant (871) par l'intermédiaire d'une transformation de Clarke (861),
pour multiplier le deuxième vecteur spatial de courant (871) par une résistance virtuelle définie (874) pour obtenir un deuxième vecteur spatial de modulation (872), et pour soustraire le deuxième vecteur spatial de modulation (872) au premier vecteur spatial de modulation (572) pour obtenir un troisième vecteur spatial de modulation (873),
et pour moduler le convertisseur de fréquence (520) selon le troisième vecteur spatial de modulation (873),
dans lequel le dispositif de commande (960) est conçu pour générer le premier vecteur spatial de modulation (572),
pour transformer les courants de phase mesurés (831, 832, 833) en un premier vecteur spatial de courant (971) par l'intermédiaire d'une transformation de Park (961) en utilisant l'angle (573),
pour multiplier une composante de courant réactif du premier vecteur spatial de courant (971) par un quotient de la résistance virtuelle définie (874) à l'indice de modulation défini (575) pour obtenir un écart angulaire (574), et pour appliquer l'écart angulaire (574) à une boucle à verrouillage de phase (563) pour réguler l'angle (573) de manière à faire disparaître la composante de courant réactif du premier vecteur spatial de courant (971),
et pour générer, par l'intermédiaire d'une transformation de Park inverse (562), le premier vecteur spatial de modulation (572) qui présente en tant qu'amplitude l'angle (573) et l'indice de modulation défini (575).

4. Ensemble circuit (900) selon la revendication 3, dans lequel le dispositif de commande (960) est conçu pour générer au moyen d'une modulation de vecteur spatial (561) à partir du troisième moyen de vecteur spatial de modulation (873) un signal de commande (571) destiné au convertisseur de fréquence (520).

5. Ensemble circuit (900) selon l'une des revendications 3 et 4,
dans lequel le convertisseur de fréquence (520) est un convertisseur IGBT.

EP 2 820 752 B1

Fig.1

Fig.2

Fig.3

Fig.4

EP 2 820 752 B1

EP 2 820 752 B1

Fig.5

Fig.6

Fig.7

EP 2 820 752 B1

Fig.8

Fig.9

Fig.10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5585708 A
- US 20050207192 A1

- US 6038152 A

**In der Beschreibung aufgeführte Nicht-Patentliteratur**

- Optimal control and appropriate pulse width modulation for a three-phase voltage DC-link PWM Converter. **MARSCHALKO R.** PROCEEDINGS OF THE INDUSTRY APPLICATIONS SOCIETY ANNUAL MEETHING.HOUSTON, OCT. 4-9, 1992; [PROCEEDINGS OF THE INDUSTRY APPLICATIONS SOCIETY ANNUAL MEETING. IEEE, 04. Oktober 1992, 1042-1049
- Impact of doubleloop controller on grid connected inverter input admittance using virtual resistor. **ARWINDRA RIZQIAWAN.** APPLIED POWER ELECTRONICS COLLOQUIUM (IAPEC), 2011 IEEE. IEEE, 18. April 2011, 170-175

- Design and Analysis of the Droop Control Method for Parallel Inverters Considering the Impact of the Complex Impedance on the Power Sharing. **WIE YAO et al.** IEEE TRANSACTIONS ON INDUSTRIAL ELECTRONICS. IEEE SERVICE CENTER, 01. Februar 2011, vol. 58, 576-588
- SINAMICS SM150 Listenhandbuch - Netzspannungsüberwachung 1,2. **SIEMENS AG.** SINAMICS SM150 Listenhandbuch - Netzspannungsüberwachung 1,2. 31. Juli 2007, 2-870